# NEW EUROPEAN PATENT SPECIFICATION

(11) **EP 2 956 010 B2**
(45) Date of publication and mention of the opposition decision: **21.12.2022**
(45) Mention of the grant of the patent: 04.01.2017
(21) Application number: 13713532.3
(22) Date of filing: 12.02.2013
(51) Int. Cl.: A23L 33/00, A23D 9/00, C11C 3/08, A23D 9/02, A23L 33/115, A23L 33/12

(54) **FAT COMPOSITION**
FETTZUSAMMENSETZUNG
COMPOSITION DE MATIÈRES GRASSES

(43) Date of publication of application: 23.12.2015
(73) Proprietor: Bunge Loders Croklaan B.V., 1521 AZ Wormerveer (NL)
(72) Inventor: YAN, Youchun, Pasir Gudang Johor 81700 (MY); THEAN, See Wee, Pasir Gudang Johor 81700 (MY); WONG, Pin Huey, Pasir Gudang Johor 81700 (MY)
(74) Representative: Potter Clarkson
(86) International application number: PCT/IB2013/051143
(87) International publication number: WO 2014/125327

(56) References cited:
- WO-A1-94/26855
- WO-A1-2011/135564
- WO-A2-2009/047754
- US-A- 5 000 975
- US-A- 5 709 888
- US-B1- 6 248 909
- RONIT LUBETZKY MD ET AL: "Human Milk fatty acids Profile changes during Prolonged lactation: a cross-sectional study", IMAJ, vol. 14, 1 January 2012 (2012-01-01), pages 7-10, XP055093734,
- THOMPKINSON AND SUMAN KHARB D K: "Aspects of Infant Food Formulation", COMPREHENSIVE REVIEWS IN FOOD SCIENCE AND FOOD SAFETY, vol. 6, no. 4, 2007, pages 79-102, XP009112670, ISSN: 1541-4337, DOI: 10.1111/J.1541-4337.2007.00020.X [retrieved on 2007-09-14]
- SHEILA M. INNIS: "Human milk and formula fatty acids", THE JOURNAL OF PEDIATRICS, vol. 120, no. 4, 1 April 1992 (1992-04-01) , pages S56-S61, XP055093171, ISSN: 0022-3476, DOI: 10.1016/S0022-3476(05)81237-5

## Description

This invention relates to a fat composition, a process for its production and its use in an infant formula.

Fat compositions containing similar amounts of the principal fatty acids found in human milk fat may be derived from oils and fats of vegetable origin. However, there remains a significant difference in composition between milk replacement fats, derived from natural sources, and that of human milk fat. This difference arises because most glycerides of vegetable origin are unsaturated in the 2-position. In contrast, a substantial amount of palmitic acid occupies the 2-position of glycerides in human milk fat. The triglyceride 1,3-dioleoyl-2-palmitoyl glyceride (OPO) is an important glyceride component of human milk fat.

The difference in the distribution of bound fatty acids along the glyceride positions is believed to have important dietary consequences. In order to most closely match the chemical and/or physical properties of triglyceride fats or oils obtained from natural sources, to that of human milk fat, therefore, it is necessary to control the distribution of the fatty acid residues on the glyceride positions.

EP-A-0209327 discloses milk replacement fat compositions comprising the triglyceride 1,3-dioleoyl-2-palmitoyl glyceride (OPO). According to EP-A-0209327, these fat compositions can be obtained by subjecting fatty mixtures comprising glycerides consisting substantially of more saturated 2-palmitoyl glycerides to a rearrangement catalyst, such as a lipase, which is regiospecific in activity in the 1- and 3-positions of the glycerides. Enzymatic processes of this kind are also described in GB 1577933. Under the influence of the catalyst, unsaturated fatty acid residues may be introduced into the 1- and 3-positions of the 2-palmitoyl glycerides by exchange with unsaturated free fatty acids or their alkyl esters.

WO 2005/036987 discloses a process for producing a fat base by reacting a palmitic rich oil with unsaturated fatty acids such as oleic acid. The total palmitic acid residue content of the fat base is at most 38% and at least 60% of the fatty acid moieties are in the 2-position of the glyceride backbone. A related disclosure can be found in WO 2005/037373, filed on the same day.

US 5,658,768 describes a process for the production of human milk fat replacers by enzymatic conversion of triglycerides. The process converts trisaturated triglycerides using a 1,3- specific enzyme to add unsaturated fatty acids at the 1- and 3- positions of the triglyceride.

WO 94/26855 relates to human milk fat replacers obtained by 1,3-specific enzymatic conversion of triglyceride mixtures to produce a triglyceride composition in which at least 10% of the 1,3- positions are occupied by C₈ to C₁₄ fatty acids.

There remains a need to provide new fat compositions that are better suited to replace human milk fat in various parts of the world. There is also a need for such compositions that can be produced cheaply from vegetable sources. There is also a need for fat compositions that can be blended with dairy products (e.g., cow's milk).

According to the invention, there is provided a fat composition according to claim 1.

Also provided by the invention is a process for producing the fat composition of the invention, which comprises blending a mixture of fats including an OPO-rich fat, palm kernel oil and a medium chain triglyceride oil.

Further provided by the invention is the use of a fat composition of the invention in an infant formula.

In another aspect, the invention provides an infant formula comprising a fat composition of the invention together with protein, carbohydrate, minerals and vitamins.

The invention also provides a fat blend comprising a fat composition of the invention and milk fat derived from cow's milk.

Yet another aspect of the invention is a process for preparing an infant formula comprising combining a fat composition of the invention with protein, carbohydrate, minerals and vitamins.

The invention is based on the finding of a fat composition that can be produced by blending vegetable fats and oils and that can match the composition of human milk fat in various parts of the world, including, for example, East Asia.

The fat composition of the invention comprises fatty acids. The term fatty acid, as used herein, refers to straight chain saturated or unsaturated (including mono- and polyunsaturated) carboxylic acids having from 8 to 24 carbon atoms. The term is used herein to refer to the carboxylic acid residues bound to the glycerol moiety as acyl groups in glycerides. Thus, the fat composition contains the fatty acids in glycerides, predominantly triglycerides but also in diglycerides and monoglycerides.

The terms "fat" and "oil" as used herein refer to glyceride compositions containing fatty acyl groups. Oils are generally lower melting than fats but the two terms are used to some extent interchangeably.

Preferably, the fat composition of the invention comprises greater than 95 % by weight triglycerides and less than 5 % by weight, more preferably from 0.1 to 3 % by weight, total diglycerides and monoglycerides, based on the weight of the fat composition.

The notation Cx:y is standard in the art and refers to fatty acids having x carbon atoms and y double bonds. For example, C18:1 refers to oleic acid and C16:0 refers to palmitic acid. C18:2 is linoleic acid and C18:3 is linolenic acid.

All percentages of fatty acids used herein refer to fatty acids bound as acyl groups in glycerides and are by weight based on total C8 to C24 fatty acids present in the fat composition.

The levels of fatty acids present in the compositions of the invention can be determined by methods well-known to those skilled in the art such as GC-FAME.

Preferably, the fat composition of the invention comprises from 33 to 40% C18:1.

Preferably, the fat composition of the invention comprises from 20 to 30% C18:2.

More preferably, the fat composition of the invention comprises from 33 to 40% C18:1 and from 20 to 30% C18:2.

Preferably, at least 37%, more preferably at least 40%, of total C16:0 is bound to the sn-2 position in a glyceride. These percentages are based on total palmitic acid present. Thus, the fat composition of the invention has more palmitic acid at the sn-2 position in the fat composition than would be expected from a random distribution of this fatty acid.

Preferably, the fat composition of the invention comprises from 3 to 5 % C8:0.

Preferably, the fat composition of the invention comprises from 3 to 4 % C10:0.

Preferably, the fat composition of the invention comprises from 5 to 8 % C12:0.

Preferably, the fat composition of the invention comprises from 2 to 4 % C14:0.

Preferably, the fat composition of the invention comprises from 17 to 25 % C16:0.

Preferably, the fat composition of the invention comprises from 2 to 4 % C18:0.

Preferably, the fat composition of the invention comprises from 30 to 40 % C18:1.

Preferably, the fat composition of the invention comprises from 20 to 25 % C18:2.

Preferably, the fat composition of the invention comprises from 1 to 3 % C18:3.

The weight ratio of C₁₂ : C₁₄ fatty acids in the compositions of the invention is preferably greater than 1:1, more preferably greater than 1.5:1.

The fat composition may contain minor amounts of other fatty acids to make the total fatty acid content up to 100 %. For example, the fat composition of the invention may comprise from 0.1 to 1 % by weight of C20:0, C20:1 and C22:0.

In one embodiment, the fat composition of the invention has the following fatty acid content:
- from 3 to 5% C8:0
- from 2 to 5% C10:0
- from 5 to 10% C12:0
- from 1 to 5% C14:0
- from 15 to 25% C16:0
- from 1 to 5% C18:0
- from 25 to 45% C18:1
- from 20 to 25% C18:2, and
- from 0.5 to 5% C18:3.

The fat composition of the invention is a blend of fats and oils of vegetable origin. Fats and oils of vegetable origin are obtained directly or indirectly from vegetable sources. The vegetable fats are preferably refined. The term "refined", as used herein, refers to processes in which the purity of an oil or fat is increased by a process which comprises at least the steps of bleaching, followed by filtering and deodorising (such as by steam refining). The fats are typically not hydrogenated.

Since vegetable fats do not contain significant amounts of cholesterol, the fat compositions of the invention preferably contain less than 1%, more preferably less than 0.5%, by weight of cholesterol.

Also, since non-hydrogenated vegetable fats do not contain significant amounts of trans-fats, the fat compositions of the invention preferably contain less than 1%, more preferably less than 0.5%, by weight of trans fatty acids.

The term OPO-rich fat refers to fats that comprise at least 10 % by weight of the triglyceride OPO (1,3-dioleoyl-2-palmitoyl glyceride), preferably at least 15 % by weight OPO, more preferably at least 20 % by weight OPO, based
on the total weight of the fat. Such fats are commercially available, for example as Betapol^{®} from Loders Croklaan BV, Wormerveer, The Netherlands such as Betapol^{®} B-55.

The OPO-rich fat preferably has a fatty acid composition with one or more of the following features:
C12:0 content of up to 0.5 % by weight;
C16:0 content of from 30 to 45 %, more preferably 35 to 40 %, by weight;
C18:0 content of from 1 to 5 % by weight;
C18:1 content of from 40 to 60 %, more preferably 45 to 55 %, by weight;
C18:2 content of from 5 to 12 % by weight;
any other fatty acids being present in an amount of less than 0.5 % by weight each, and all of the percentages being based on total C8 to C24 fatty acids in the OPO-rich fat.

The OPO-rich fat may be produced by a method comprising:
(i) subjecting one or more palm oil stearin fractions to enzymic transesterification with oleic acid or a non-glyceride ester thereof using an enzyme having selectivity for the 1- and 3- positions of a glyceride; and
(ii) separating palmitic acid or palmitic non-glyceride esters from the product obtained in (i).

The palm oil stearin fractions may be a single palm oil stearin or a mixture of palm oil stearins, for example obtained in different fractionation processes and/or having different physical and/or chemical properties, such as different melting temperatures or different iodine values (IVs). Preferably, the one or more palm oil stearin fractions is or are bleached and deodorised before the interesterification step. Bleaching and deodorising can be carried out using techniques that are well known in the art.

The term "stearin" refers to a triglyceride mixture or fat blend from which at least 10 % by weight of the lower melting constituents have been removed by some kind of fractionation, e.g., dry fractionation or solvent fractionation.

The optional bleaching of the palm oil stearin is typically performed above 95 °C, more preferably above 100 °C (such as at from 105 °C to 120 °C). In the deodorising step, volatile impurities are removed from the palm oil stearin to yield deodorised palm oil stearin, typically at temperatures above 200 °C. The impurities removed in the deodorising step commonly include free fatty acids, aldehydes, ketones, alcohols and other hydrocarbon impurities. The bleaching and deodorising may be carried out in a single process step or two or more process steps. For example, the steps may be carried out at reduced pressures (e.g., 10 mm Hg or below), wherein the palm oil stearin is contacted with steam to help vaporise the impurities. Bleaching and deodorising the palm oil stearin may help to improve the yield.

Preferably, the one or more palm oil stearins is or are provided by fractionating palm oil or a derivative thereof. Although fractionation may be carried out with or without a solvent, it is preferred that the fractionation of the palm oil comprises dry fractionation. Thus, the process of fractionation is preferably carried out in the absence of a solvent.

The palm oil stearin preferably has an iodine value (IV) from about 2 to about 40, more preferably from about 6 to about 35. Palm oil stearin having an iodine value of from 8 to 18 is particularly preferred. The iodine value is determined according to standard methods known in the art (e.g., ASTM D5554-95 (2001)).

The palm oil stearin may comprise a mixture of at least two palm oil stearins having different iodine values. For example, the palm oil stearin may comprise a mixture of a first palm oil stearin having an iodine value of from about 10 to about 20 and a second palm oil stearin having an iodine value of from about 25 to 50.

Optionally, the one or more palm oil stearins are interesterified to form a randomly interesterified palm oil stearin before step (i). This may be carried out using any method that effects random interesterification of the triglycerides in the one or more palm oil stearins.

In step (i), the palm oil stearin is selectively transesterified with oleic acid or an oleoyl ester. This reaction preferentially replaces residues at the 1- and 3- positions of the glyceride relative to those at the 2- position. Thus, the product has greater amounts of the oleoyl residue at the 1- and 3- positions than at the 2- position. In the enzymic transesterification of step (i), the fatty acids on the 2-position of the triglycerides typically do not change (for example, less than 40 % by moles (or weight) of fatty acyl groups in the 2-position, more preferably less than 20 %, such as less than 5 % or less than 1 %, change during the process). The conditions of the process are selected so as to provide the desired degree of selectivity from the enzyme. Preferred enzymes for use in step (i) are lipases from *Rhizopus delemar* and *Rhizomucor miehei.* The transesterification reaction is typically performed to reach or approach equilibrium at a conversion ratio of a minimum of at least 50 %, preferably at least 60 %, most preferably at least 70 %.

Preferably, in the transesterification reaction of step (i), palm oil stearin is mixed with an oleic acid concentrate (comprising free oleic acid at a concentration of greater than 65 % by weight, preferably greater than 70 % by weight, most preferably greater than 75 % by weight). Alternatively, the oleic acid may be provided as a mixture comprising oleic acid (preferably in an amount of greater than 65 % by weight), linoleic acid and, optionally, one or more other fatty acids. The ratio of palm oil stearin to oleic acid concentrate is preferably from 0.1:1 to 2:1, more preferably from 0.4:1 to 1.2:1, even more preferably from 0.4:1 to 1:1, most preferably from 1:1.1 to 1:2 on a weight basis. The reaction is preferably carried out at a temperature of from 30 °C to 90 °C, preferably from 50 °C to 80 °C, such as about 60 °C to 70 °C, and may be conducted batchwise or in continuous fashion, with or without a water-immiscible organic solvent.

Before the enzyme transesterification reaction of step (i), the humidity is preferably controlled to a water activity between 0.05 and 0.55, preferably between 0.1 and 0.5, depending on the type of biocatalyst enzyme system used. The reaction may be performed, for example, at 60 °C in a stirred tank or in a packed bed reactor over biocatalysts, based on concentrates of Lipase D (*Rhizopus oryzae,* previously classified as *Rhizopus delemar,* from Amano Enzyme Inc., Japan) or immobilised concentrates of *Rhizomucor miehei* (Lipozyme RM IM from Novozymes A/S, Denmark).

The non-glyceride esters of oleic acid that are optionally used, in addition to or as an alternative to, oleic acid, are preferably alkyl esters. The term "alkyl", as used herein, includes straight chain or branched saturated hydrocarbons having from 1 to 12, more preferably 1 to 6, carbon atoms.

In step (ii), palmitic acid or palmitic non-glyceride esters are separated from the desired OPO glyceride product. It will be appreciated that the separation is not usually complete and that both the materials separated and the product that remains will be mixtures. Also, the separation of the palmitic acid or palmitic non-glyceride esters will normally also separate other fatty acids or fatty acid non-glyceride esters from the product. The term "fatty acid", as used herein, refers to straight chain, saturated or unsaturated, carboxylic acids having from 12 to 24 carbon atoms.

In order to separate palmitic acid and other fatty acids or palmitic non-glyceride esters and other glycerides from OPO in step (ii), the transesterified mixture (optionally after further treatment, such as isolation of the fat phase) is preferably distilled. Distillation is preferably carried out at low pressure (e.g., lower than 10 mbar) and elevated temperatures (e.g., greater than 200 °C) to remove the fatty acids from the product triglyceride fraction.

The process for making the OPO-rich fat may further comprise the step of dry fractionating the product obtained in (ii) to form a fraction comprising an increased amount of OPO. The dry fractionation step may be repeated i.e., the product may have been doubly fractionated to produce the OPO-rich fat. However, this step may not be required depending on the purity of the final product and the desired end use of the product.

Typically, the process further comprises blending the triglyceride composition of (ii) with at least one liquid oil. Suitable liquid oils include those mentioned above for use in the fat blend. The fat blend formed is preferably bleached and deodorised. Bleaching and deodorising can be carried out by methods well known in the art.

The blend of vegetable fats of the composition of the invention comprises (more preferably consists of):
- from 20 to 40% by weight of an OPO-rich fat
- from 20 to 40% by weight soybean oil
- from 10 to 20% by weight palm kernel oil
- from 5 to 15% by weight sunflower oil
- from 5 to 10% by weight of a medium chain triglyceride oil comprising at least 90% by weight C8:0 and C10:0 based on total C8 to C24 fatty acids present in the medium chain triglyceride oil,
- from 1 to 10% by weight high oleic sunflower oil, and
- from 0.1 to 2% by weight flaxseed oil.

The medium chain triglyceride (MCT) oil comprises at least 90% by weight C8:0 and C10:0 based on total C8 to C24 fatty acids present in the medium chain triglyceride oil. Preferably, the MCT oil comprises from 50 to 58 % by weight C8:0 and from 42 to 50 % by weight C10:0 based on total C8 to C24 fatty acids present in the medium chain triglyceride oil. The MCT oil is preferably obtained from palm kernel oil fatty acids by esterification with glycerol.

Preferably, the composition of the invention comprises from 25 to 35% by weight of an OPO-rich fat.

Preferably, the composition of the invention comprises from 25 to 35% by weight soybean oil.

Preferably, the composition of the invention comprises from 13 to 18% by weight palm kernel oil.

Preferably, the composition of the invention comprises from 8 to 13% by weight sunflower oil.

Preferably, the composition of the invention comprises from 6 to 9% by weight of a medium chain triglyceride oil comprising at least 90% by weight C8:0 and C10:0 based on total C8 to C24 fatty acids present in the medium chain triglyceride oil.

Preferably, the composition of the invention comprises from 2 to 6% by weight high oleic sunflower oil.

Preferably, the composition of the invention comprises from 0.5 to 1.5% by weight flaxseed oil.

A particularly preferred blend of vegetable fats for the composition of the invention comprises (more preferably consists of):
- from 25 to 35% by weight of an OPO-rich fat
- from 20 to 40% by weight soybean oil
- from 10 to 20% by weight palm kernel oil
- from 6 to 14% by weight sunflower oil
- from 6 to 9% by weight of a medium chain triglyceride oil comprising at least 90% by weight C8:0 and C10:0 based on total C8 to C24 fatty acids present in the medium chain triglyceride oil,
- from 2 to 8% by weight high oleic sunflower oil, and
- from 0.1 to 2% by weight flaxseed oil.

The composition of the invention may further comprise C4:0 i.e., butyric acid. The C4:0 content is typically at least 1% by weight based on total C8 to C24 fatty acids in the composition. The C4:0 can be derived from cow's milk. Thus, the composition of the invention may be a blend of vegetable fats with cow's milk or fat derived therefrom (such as full cream milk powder), preferably comprising from 25 to 35 % by weight of the milk fat based on the weight of the fats present in the blend.

The fat blends or fat compositions are particularly suitable for use in an infant formula. The present invention therefore also contemplates the use of the fat compositions in an infant formula or in the preparation of an infant formula.

The fat composition is suitable for replacing at least a part of the fat in infant formula. Infant formula may comprise the fat composition of the invention together with one or more of protein, carbohydrate, minerals and vitamins. The infant formula may be in liquid form or in the form of a dry formulation, such as a powder or granules. The present invention also therefore contemplates a method for the production of infant formula comprising fat, protein and carbohydrate components, for example in the approximate relative weight proportions (2 to 3):(0.5 to 1.5):(4 to 6), wherein at least a part of the fat normally used in such formulations is replaced by the fat composition or fat blend made. Dry formulations containing this mixture, together with additional components customary in such formulations such as protein, carbohydrate, minerals and vitamins, may be dispersed for use in sufficient water to produce an emulsion of approximately 2 to 5 grams of fat per 100 ml of dispersion.

The infant formula of the present invention can be prepared in a variety of product forms. Typically, the infant formula is prepared in the form of a ready-to-feed liquid, a liquid concentrate for dilution prior to consumption, or a powder that is reconstituted prior to consumption. It will appreciated by those skilled in the art that the liquid concentrates or powders may be reconstituted ready for use in any suitable liquid medium, for example, cow's milk (preferably full fat cow's milk) and/or water.

In a preferred embodiment, the infant formula is in the form of a powder, which is adapted to be reconstituted prior to consumption. The infant formula in the form of a powder preferably has a total fat content of from 20 to 40% by weight, more preferably from 25 to 35% by weight.

The following non-limiting examples illustrate the invention and do not limit its scope in any way. In the examples and throughout this specification, all percentages, parts and ratios are by weight unless indicated otherwise.

### EXAMPLES

### Example 1

32.4% of neutralized OPO-rich fat (such as Betapol^{®} B-55) having the fatty acid composition (FAME) shown in Table 1 below and produced by a 1,3- selective enzymatic reaction of oleic acid with palm oil stearin having an iodine value of 10, followed by double fractionation and neutralization, was blended with 29.1% by weight refined soybean oil, 15.8% by weight refined palm kernel oil, 10.8% by weight refined sunflower oil,, 4.2 % by weight refined high oleic sunflower oil and 0.8% by weight refined flaxseed oil. The blend was bleached, deodorized and sparged with nitrogen.

**Table 1: Fatty acid composition of the OPO-rich fat**

| Fatty acids | Amount of fatty acids in fat blend in % by weight |
|---|---|
| C12:0 | 0.1 |
| C14:0 | 0.5 |
| C16:0 | 37.6 |
| C18:0 | 2.7 |
| C18:1 | 50.3 |
| C18:2 | 8.0 |
| C20:0 | 0.2 |
| C22:0 | 0.3 |
| others | To 100 % |

Then 7% by weight refined medium chain triglycerides (MCT oil) having a fatty acid methyl ester (FAME) composition corresponding to 53.8 % by weight caprylic acid and 46.1% by weight capric acid (available from Sternchemie) and 0.025% Tocoblend L-50 IP (available from Vitablend) were added to the refined blend to form the fat blend of the invention.

The fat blend had the fatty acid composition (FAME) shown in Table 2.

**Table 2: Fatty acid composition of the fat blend**

| Fatty acids | Amount of fatty acids in fat blend in % by weight |
|---|---|
| C8:0 | 4.2 |
| C10:0 | 3.7 |
| C12:0 | 7.1 |
| C14:0 | 2.7 |
| C16:0 | 19.0 |
| C18:0 | 2.9 |
| C18:1 | 34.0 |
| C18:2 | 23.1 |
| C18:3 | 2.3 |
| C20:0 | 0.4 |
| C20:1 | 0.2 |
| C22:0 | 0.1 |
| others | To 100 % |
| Sn-2 (C16:0 content in sn-2 position based on total C16:0) | 41.0 |

## Claims

1. A fat composition which is a blend of fats of vegetable origin, having the following fatty acid content:
- from 3 to 5% C8:0
- from 1 to 5% C10:0
- from 2 to 10% C12:0
- from 1 to 5% C14:0
- from 15 to 30% C16:0
- from 1 to 7% C18:0
- from 25 to 45% C18:1
- from 15 to 30% C18:2, and
- from 0.5 to 5% C18:3,
said percentages being by weight based on total C8 to C24 fatty acids present in the fat composition,
wherein at least 33% of total C16:0 is bound to the sn-2 position in a glyceride,
and wherein the composition comprises:
- from 20 to 40% by weight of an OPO-rich fat
- from 20 to 40% by weight soybean oil
- from 10 to 20% by weight palm kernel oil
- from 5 to 15% by weight sunflower oil
- from 5 to 10% by weight of a medium chain triglyceride oil comprising at least 90% by weight C8:0 and C10:0 based on total C8 to C24 fatty acids present in the medium chain triglyceride oil,
- from 1 to 10% by weight high oleic sunflower oil, and
from 0.1 to 2% by weight flaxseed oil.

2. Composition as claimed in Claim 1, comprising from 33 to 40% C18:1.

3. Composition as claimed in Claim 1 or Claim 2, comprising from 20 to 30% C18:2.

4. Composition as claimed in any one of the preceding claims, wherein at least 37%, more preferably at least 40%, of total C16:0 is bound to the sn-2 position in a glyceride.

5. Composition as claimed in Claim 1, wherein the fats are refined.

6. Composition as claimed in any one of Claims 1 to 5, which further comprises C4:0.

7. Composition as claimed in Claim 6, wherein the C4:0 content is at least 1% by weight based on total C8 to C24 fatty acids in the composition.

8. Composition as claimed in Claim 6 or Claim 7, wherein the C4:0 is derived from cow's milk.

9. Fat blend comprising the composition of any one of Claims 1 to 5 and from 25 to 35% by weight milk fat derived from cow's milk.

10. A process for producing the fat composition of any one of Claims 1 to 8, which comprises blending a mixture of fats including an OPO-rich fat, palm kernel oil and a medium chain triglyceride oil.

11. Use of a composition of any one of Claims 1 to 8 in an infant formula.

12. An infant formula comprising a fat composition of any one of Claims 1 to 8 together with protein, carbohydrate, minerals and vitamins.

13. A process for preparing an infant formula comprising combining a fat composition of any one of Claims 1 to 8 with protein, carbohydrate, minerals and vitamins.

## Patentansprüche

1. Eine Fettzusammensetzung, die eine Mischung aus Fetten pflanzlichen Ursprungs ist, die den folgenden Fettsäuregehalt aufweist:
- von 3 bis 5 % C8:0
- von 1 bis 5 % C10:0
- von 2 bis 10 % C12:0
- von 1 bis 5 % C14:0
- von 15 bis 30 % C16:0
- von 1 bis 7 % C18:0
- von 25 bis 45 % C18:1
- von 15 bis 30 % C18:2, und
- von 0,5 bis 5 % C18:3,
wobei die Prozentsätze auf das Gewicht bezogen sind, basierend auf den gesamten C8- bis C24-Fettsäuren, die in der Fettzusammensetzung vorhanden sind,
wobei mindestens 33 % des gesamten C16:0 an die sn-2-Position in einem Glycerid gebunden ist,
und wobei die Zusammensetzung umfasst:
- von 20 bis 40 Gew.-% eines OPO-reichen Fettes
- von 20 bis 40 Gew.-% Sojabohnenöl
- von 10 bis 20 Gew.-% Palmkernöl
- von 5 bis 15 Gew.-% Sonnenblumenöl
- 5 bis 10 Gew.-% eines mittelkettigen Triglyceridöls, umfassend mindestens 90 Gew.-% C8:0 und C10:0, basierend auf die gesamten C8- bis C24-Fettsäuren, die in dem mittelkettigen Triglyceridöl vorhanden sind,
- 1 bis 10 Gew.-% Sonnenblumenöl mit hohem Ölsäuregehalt, und
- von 0,1 bis 2 Gew.-% Leinsamenöl.

2. Zusammensetzung nach Anspruch 1, umfassend von 33 bis 40 % C18:1.

3. Zusammensetzung nach Anspruch 1 oder 2, umfassend 20 bis 30 % C18:2.

4. Zusammensetzung nach einem der vorstehenden Ansprüche, wobei mindestens 37 %, mehr bevorzugt mindestens 40 % des gesamten C16:0 an die sn-2-Position in einem Glycerid gebunden ist.

5. Zusammensetzung nach Anspruch 1, wobei die Fette raffiniert sind.

6. Zusammensetzung nach einem der Ansprüche 1 bis 5, die ferner C4:0 umfassen.

7. Zusammensetzung nach Anspruch 6, wobei der C4:0-Gehalt mindestens 1 Gew.-% beträgt, basierend auf den gesamten C8- bis C24-Fettsäuren in der Zusammensetzung.

8. Zusammensetzung nach Anspruch 6 oder 7, wobei das C4:0 von Kuhmilch abstammt.

9. Fettmischung, umfassend die Zusammensetzung nach einem der Ansprüche 1 bis 5 und 25 bis 35 Gew.-% Milchfett, das von Kuhmilch abstammt.

10. Verfahren zum Erzeugen der Fettzusammensetzung nach einem der Ansprüche 1 bis 8, der das Mischen eines Gemischs von Fetten, einschließlich eines OPO-reichen Fettes, Palmkernöls, Sojabohnenöls, Sonnenblumenöls, Sonnenblumenöls mit hohem Ölsäuregehalt, Leinsamenöls und ein mittelkettiges Triglyceridöl umfasst.

11. Verwendung einer Zusammensetzung nach einem der Ansprüche 1 bis 8 in einer Säuglingsanfangsnahrung .

12. Säuglingsanfangsnahrung, umfassend eine Fettzusammensetzung nach einem der Ansprüche 1 bis 8 zusammen mit Protein, Kohlenhydrat, Mineralien und Vitaminen.

13. Verfahren zum Herstellen einer Säuglingsanfangsnahrung, umfassend das Kombinieren einer Fettzusammensetzung nach einem der Ansprüche 1 bis 8 mit Protein, Kohlenhydrat, Mineralien und Vitaminen.

## Revendications

1. Composition de matières grasses qui est un mélange de graisses d'origine végétale, ayant la teneur en acides gras suivante :
- entre 3 et 5 % de C8:0
- entre 1 et 5 % de C10:0
- entre 2 et 10 % de C12:0
- entre 1 et 5 % de C14:0
- entre 15 et 30 % de C16:0
- entre 1 et 7 % de C18:0
- entre 25 et 45 % de C18:1
- entre 15 et 30 % de C18:2, et
- entre 0,5 et 5 % de C18:3,
lesdits pourcentages étant en poids par rapport au total des acides gras en C8 à C24 présents dans la composition de matière grasse,
dans laquelle au moins 33 % du total de C16:0 est lié à la position sn-2 dans un glycéride,
et dans laquelle la composition comprend :
- entre 20 et 40 % en poids d'une matière grasse riche en OPO
- entre 20 et 40 % en poids d'huile de soja
- entre 10 et 20 % en poids d'huile de palmiste
- entre 5 et 15 % en poids d'huile de tournesol
- entre 5 et 10 % en poids d'une huile de triglycérides à chaîne moyenne comprenant au moins 90 % en poids d'acides gras de C8:0 et C10:0 par rapport au total d'acides gras en C8 à C24 présents dans l'huile de triglycérides à chaîne moyenne,
- entre 1 et 10 % en poids d'huile de tournesol à haute teneur en acide oléique, et
- entre 0,1 et 2 % en poids d'huile de lin.

2. Composition selon la revendication 1, comprenant entre 33 et 40 % de C18:1.

3. Composition selon la revendication 1 ou la revendication 2, comprenant de 20 à 30 % de C18:2.

4. Composition selon l'une quelconque des revendications précédentes, dans laquelle au moins 37 %, plus préférablement au moins 40 %, du total de C16:0 est lié à la position sn-2 dans un glycéride.

5. Composition selon la revendication 1, dans laquelle les matières grasses sont raffinées.

6. Composition selon l'une quelconque des revendications 1 à 5, qui comprend en outre C4:0.

7. Composition selon la revendication 6, dans laquelle la teneur en C4:0 est d'au moins 1 % en poids par rapport au total des acides gras en C8 à C24 dans la composition.

8. Composition selon la revendication 6 ou la revendication 7, dans laquelle C4:0 est dérivé du lait de vache.

9. Mélange de matières grasses comprenant la composition selon l'une quelconque des revendications 1 à 5 et entre 25 et 35 % en poids de matières grasses du lait dérivées du lait de vache.

10. Procédé de production de la composition de matières grasses selon l'une quelconque des revendications 1 à 8, qui comprend le mélange d'un dosage de matières grasses comportant une matière grasse riche en OPO, de l'huile de palmiste, de l'huile de soja, de l'huile de tournesol, de l'huile de tournesol à haute teneur en acide oléique, de l'huile de lin et une huile de triglycérides à chaîne moyenne.

11. Utilisation d'une composition selon l'une quelconque des revendications 1 à 8 dans une préparation pour nourrissons.

12. Préparation pour nourrissons comprenant une composition de matières grasses selon l'une quelconque des revendications 1 à 8 avec des protéines, des glucides, des minéraux et des vitamines.

13. Procédé de préparation d'une préparation pour nourrissons comprenant la combinaison d'une composition de matières grasses selon l'une quelconque des revendications 1 à 8 avec des protéines, des glucides, des minéraux et des vitamines.
